# EUROPÄISCHE PATENTSCHRIFT

(11) **EP 2 106 945 B1**
(45) Veröffentlichungstag und Bekanntmachung des Hinweises auf die Patenterteilung: **28.12.2011**
(21) Anmeldenummer: 08006515.4
(22) Anmeldetag: 31.03.2008
(51) Int. Cl.: B60J 7/06, B60Q 1/44

(54) **Fahrzeugfaltverdeck mit einer Bremsleuchteneinheit**
Folding roof, including a brake light unit, for a vehicle
Capote pliable, doté d'une unité d'un feu stop, pour véhicule

(43) Veröffentlichungstag der Anmeldung: 07.10.2009
(73) Patentinhaber: Webasto AG, 82131 Stockdorf (DE)
(72) Erfinder: Reihl, Peter, 82319 Starnberg (DE); Bruggaier, Ulrike, 82041 Oberhaching (DE); Miklosi, Stefan, 81247 München (DE); Haussmann, Jochen, 82346 Andechs (DE)
(74) Vertreter: Konnerth, Dieter Hans

(56) Entgegenhaltungen:
- DE-A1- 10 113 100
- DE-A1- 10 120 359
- DE-C- 19 731 330
- DE-C1- 19 943 768
- US-A- 6 000 745
- US-A1- 2005 280 290

## Beschreibung

Die Erfindung betrifft ein Faltverdeck eines Fahrzeugs mit einer am Faltverdeck angeordneten Bremsleuchteneinheit.

Ein aus der DE 197 31 330 C2 bekanntes Faltverdeck enthält einen hinteren Dachrahmen, der über ein Viergelenk an seitlichen B-Säulen bewegbar gelagert ist, bei geschlossenem Verdeck eine obere Stellung einnimmt und bei geöffnetem Verdeck in eine untere Stellung herabgeschwenkt ist. An dem hinteren Dachrahmen des Faltverdecks ist eine dritte Bremsleuchte angebracht, die sowohl bei offenem als auch bei geschlossenem Verdeck bei entsprechender Stellung des Dachrahmens sichtbar ist.

Aus der DE 199 43 768 C1 ist ein Faltverdeck eines Fahrzeugs bekannt geworden, das ein als Dachkassette gebildetes hinteres Dachteil aufweist. Die Dachkassette ist beidseits über ein Viergelenk an der Karosserie bewegbar gelagert und ein Verdeckstoff überspannt die Rückseite der als Spritzgussteil geformten Dachkassette. Ein als Formkörper gebildetes Festelement ist im Bereich der Dachkassette von außen am Verdeckstoff befestigt, indem eine Innenwand des Festelements unmittelbar mit dem Verdeckstoff verschweißt ist. Das Festelement weist eine Abdeckung auf, die mit dem Formkörper durch Kleben, Schrauben oder Klipsen verbunden ist und eine oberseitige als Spoiler gebildete Abdeckleiste enthält. An der Abdeckung ist eine dritte Bremsleuchte angeordnet.

Das Dokument DE 10113100 A1 offenbart ein Faltverdeck eines Fahrzeugs mit einer am Faltverdeck angeordneten Bremsleuchteneinheit, die in einer in einem Verdeckstoff des Faltverdecks gebildeten Ausnehmung aufgenommen ist.

Die vorgenannten Bremsleuchten sind an starren voluminösen Bauteilen des Faltverdecks angebracht, die bei geöffnetem und abgelegtem Faltverdeck einen vergleichsweise großen Raumbedarf haben und damit einem flachen Ablagevolumen entgegenstehen.

Der Erfindung liegt die Aufgabe zugrunde, ein eingangs genanntes Faltverdeck zu schaffen, das eine hinsichtlich ihrer Anordnung und Gestaltung verbesserte Bremsleuchteneinheit aufweist.

Die Aufgabe wird erfindungsgemäß durch ein Faltverdeck mit den Merkmalen des Anspruchs 1 gelöst.

Vorteilhafte Ausgestaltungen der Erfindung sind in den abhängigen Ansprüchen angegeben.

Dadurch, dass die Bremsleuchteneinheit in einer in einem Verdeckstoff des Faltverdecks gebildeten Ausnehmung oder Öffnung aufgenommen und damit in den Verdeckstoff integriert ist, kann ihre Gestaltung unabhängig von einem größeren an einem starren Verdeckteil angeordneten oder ein starres Verdeckteil bildenden Bauteil vorgenommen werden. Dabei ist es zweckmäßig und ausreichend, wenn zumindest ein Teil oder Abschnitt der Bremsleuchteneinheit in der Ausnehmung oder Öffnung angeordnet ist. So kann eine lichtaussendende Fläche oder Streuscheibe der Bremsleuchteneinheit in etwa in der Ebene des Verdeckstoffes bei geschlossenem Faltverdeck oder auch darüber hinausstehend oder außerhalb der Ebene des Verdeckstoffes angeordnet sein. Die Ausnehmung oder Öffnung in dem Verdeckstoff wird in der erforderlichen Größe und Form z. B. ausgeschnitten oder ausgestanzt.

Demnach ist die Bremsleuchteneinheit des erfindungsgemäßen Faltverdecks nicht auf den Verdeckstoff außenseitig aufgesetzt, sondern in den Verdeckstoff integriert und unmittelbar mit oder von diesem beim Ablegen des Faltverdecks bewegbar.

Somit ist vorgesehen, dass der Verdeckstoff die Bremsleuchteneinheit vollständig umgibt und keine weiteren voluminösen Bauteile an der Bremsleuchteneinheit enthalten sind oder sie umgeben.

Des weiteren ist bevorzugt, dass der Verdeckstoff oberhalb und/oder unterhalb der Bremsleuchteneinheit eine Funktion als Filmscharnier aufweist, so dass in einfacher Weise eine relative Beweglichkeit der Bremsleuchteneinheit gegenüber dem angrenzenden Faltverdeck gegeben ist.

Gemäß der Erfindung ist eine Halterung der Bremsleuchteneinheit innenseitig an einem die Ausnehmung umgebenden Randbereich des Verdeckstoffes angebracht, insbesondere durch Kleben, Nähen oder Verschweißen. Durch die innenseitige Anbringung der Halterung kann an der Außenseite der Verdeckstoff bis unmittelbar an die Ausnehmung reichen, so dass keine weiteren Bauteile optisch hervortreten. Die Halterung als Teil der Bremsleuchteneinheit oder als zusätzliches Teil bildet somit eine stabile Lagerung für die Bremsleuchteneinheit an dem Verdeckstoff und sie enthält insbesondere eine Befestigungsaufnahme für einen Leuchtenkörper der Bremsleuchteneinheit. Der Leuchtenkörper als das das Bremslicht abstrahlende Bauteil kann somit lösbar und austauschbar an der Halterung festgelegt werden.

Zweckmäßigerweise ist die Halterung als Halterahmen und insbesondere ringförmig gebildet und sie erstreckt sich im wesentlichen entlang dem Rand der im Verdeckstoff gebildeten Ausnehmung oder Öffnung. Die Halterung kann als runder, ovaler oder rechteckiger Ring gebildet sein und sie kann ein- oder mehrteilig sein.

Des weiteren kann sich der an der Halterung angebrachte Leuchtenkörper durch eine zentrale Öffnung der Halterung erstrecken, so dass er am Verdeckstoff teilweise versenkt angeordnet sein kann.

In bevorzugter Gestaltung weist der Leuchtenkörper einen randseitigen Auflagebereich auf, der sich über den die Ausnehmung umgebenden Randbereich des Verdeckstoffes erstreckt. Mit dieser Gestaltung wird bei einer Montage des Leuchtenkörpers von außen an den Verdeckstoff eine sichere Positionierung am Faltverdeck erzielt und der Leuchtenkörper kann in der Öffnung des Verdeckstoffes mit seitlichem Spiel oder Abstand zum Verdeckstoff bzw. zur Halterung aufgenommen werden und dennoch abgedichtet werden.

Grundsätzlich kann der Leuchtenkörper auch derart zweigeteilt sein, dass er von außerhalb des Verdeckstoffes und von innerhalb des Verdeckstoffes an die Halterung bzw. den Rand des Verdeckstoffes geführt und daran festgelegt und zu einer Baueinheit verbunden wird.

Eine besonders zuverlässige Abdichtung ergibt sich, wenn eine insbesondere ringförmige Dichtung zwischen dem Leuchtenkörper und dem Verdeckstoff oder der Halterung, insbesondere zwischen dem den Auflagebereich bildenden Randabschnitt und der Halterung, angeordnet ist. Die Dichtung kann prinzipiell jeden Querschnitt aufweisen und kann aus jedem geeigneten Material bestehen.

Zweckmäßigerweise ist der Leuchtenkörper an der Halterung insbesondere durch eine Schnappverbindung, durch Clipse, durch Rasthaken oder durch eine Verschraubung befestigt.

Gemäß einer weiteren bevorzugten Gestaltung ist an der Halterung ein Hilfsrahmen oder ein Gehäuse befestigt, an dem der Leuchtenkörper festlegbar ist, und insbesondere umgibt das Gehäuse die Rückseite des eingesetzten Leuchtenkörpers. Der Hilfsrahmen bzw. das Gehäuse schützt damit den verdeckinnenseitigen Teil des Leuchtenkörpers, der dementsprechend einfach gestaltet werden kann.

Zweckmäßigerweise ist der Hilfsrahmen bzw. das Gehäuse an der Halterung durch eine Steckverbindung, eine Verrastung oder eine Verschraubung befestigt oder er ist daran dauerhaft z. B. durch Verkleben befestigt.

Des weiteren kann vorgesehen sein, dass die Halterung der Bremsleuchteneinheit innenseitig an dem die Ausnehmung umgebenden Randbereich des Verdeckstoffes angebracht ist und dass der Verdeckstoff um die Halterung umgeschlagen und daran befestigt ist und ein Steg des Leuchtenkörpers innenseitig am an der Halterung anliegenden Verdeckstoff befestigt wird. Durch den an der Halterung umgeschlagenen Verdeckstoff entfällt eine Fügeebene, die ansonsten abgedichtet werden müsste. Eine Fixierung oder Festlegung des Leuchtenkörpers an der Halterung bzw. dem Halterahmen erfolgt z. B. mittels zumindest einer Halteklammer, die den Steg des Leuchtenkörpers und die Halterung bzw. den Halterahmen umgreift.

Vorzugsweise bildet der Verdeckstoff oberhalb der Ausnehmung bzw. der Bremsleuchteneinheit ein Filmscharnier, wobei der das Filmscharnier bildende Verdeckstoff zwischen der Bremsleuchteneinheit und einem Eckspriegel des Faltverdecks angeordnet sein kann. Das Filmscharnier übernimmt dabei eine Gelenkfunktion, so dass auf eine zusätzliche Gelenk- oder Schwenklagereinrichtung für die Bremsleuchteneinheit verzichtet werden kann.

Besonders bevorzugt ist eine Gestaltung, wonach die Bremsleuchteneinheit sowohl bei geschlossenem Faltverdeck und wie auch bei geöffnetem Faltverdeck funktional, d. h. mit ihrer lichtabstrahlenden Seite nach hinten ausgerichtet ist. Damit bleibt die Funktionalität der Bremsleuchteneinheit stets erhalten.

Wenn die Bremsleuchteneinheit mittels einer Schwenklagereinrichtung an einem Bauteil des Faltverdecks bewegbar gelagert und/oder bei der Verstellbewegung des Faltverdecks mittels einer Kinematik zwangsgesteuert ist, kann in einfacher und betriebssicherer Weise die oben genannte Funktionalität aufrecht erhalten werden, wobei ein definierter Bewegungsablauf einstellbar ist.

Des weiteren können Anschläge vorgesehen sein, an denen die Schwenklagereinrichtung oder die Bremsleuchteneinheit in ihren beiden Endstellungen anliegt, wobei die Anschläge auch nur bei Verwendung des Verdeckstoffes als Filmscharnier zweckmäßig sein können.

Zweckmäßigerweise hat die Bremsleuchteneinheit eine Breite von weniger als 30% und insbesondere weniger als 20% der Breite des Faltverdecks an ihrer Einbauposition.

Die Bremsleuchteneinheit kann somit mit großer gestalterischer Freiheit geschaffen werden. Sie ist leicht und kostengünstig montierbar und demontierbar und damit austauschbar und sie kann zuverlässig wasserdicht am Verdeckstoff angebracht werden. Des weiteren ist sie sowohl bei geschlossenem wie auch bei geöffnetem und abgelegtem Faltverdeck in einer funktionsfähigen Stellung gehalten und bei geöffnetem und abgelegtem Faltverdeck ergibt sich eine bauraumoptimierte Anordnung.

Nachfolgend wird die Erfindung anhand eines Ausführungsbeispiels des Faltverdecks unter Bezugnahme auf die Zeichnung näher erläutert. Es zeigt:
- Fig. 1: in einer perspektivischen Draufsicht ein Fahrzeug mit einem Faltver- deck und einer in dem Verdeckstoff integrierten Bremsleuchtenein- heit bei geschlossenem Faltverdeck;
- Fig. 2: in einer perspektivischen Draufsicht das Fahrzeug gemäß Fig. 1 mit geöffnetem und über einer Heckklappe abgelegtem Faltverdeck;
- Fig. 3: in einer Längsschnittansicht das geöffnete oberhalb der Heckklappe abgelegte Faltverdeck mit der integrierten Bremsleuchteneinheit;
- Fig. 4: in einer Längsschnittansicht eine im Verdeckstoff integrierte Brems- leuchteneinheit;
- Fig. 5: in einer Längsschnittansicht ein weiteres Ausführungsbeispiel einer Bremsleuchteneinheit;
- Fig. 6: in einer Längsschnittansicht ein weiteres Ausführungsbeispiel einer Bremsleuchteneinheit; und
- Fig. 7: in einer Längsschnittansicht ein weiteres Ausführungsbeispiel einer Bremsleuchteneinheit.

Ein Fahrzeug 1 enthält ein Faltverdeck 2, das an seitlichen Dachholmen 3, die auch C-Säulen umfassen können, verschiebbar gelagert ist und in bekannter Weise zwischen einer den Fahrzeuginnenraum überdeckenden Schließstellung und einer den Fahrzeuginnenraum freigebenden Offen- oder Ablagestellung, in der es eine heckseitige Ablagestellung oberhalb einer Heckklappe 4 einnimmt, manuell oder mittels eines Antriebs verstellbar ist. Ein Fahrzeug mit einem derartigen Faltverdeck ist z. B. in der EP 1 123 220 B1 offenbart. Grundsätzlich können die Dachholme 3 ein fester Bestandteil der Fahrzeugkarosserie sein oder alternativ können sie auch an der Karosserie bewegbar gelagert und z. B. in eine Ablageposition verstellt werden oder bei in Ablagestellung angeordnetem Faltverdeck vom Fahrzeug entnommen werden. Beispiele für Fahrzeuge mit Faltverdecken an ablegbaren Holmen oder Gestängen zeigen die DE 42 03 228 A1 und die DE 101 02 643 A1.

Das Faltverdeck 2 enthält einen flexiblen Verdeckbezug oder Verdeckstoff 5, der von Querspriegeln 6 gehalten ist, die beidseits an Führungen 7 verschiebbar gelagert sind, die an den beiden Dachholmen 3 ausgebildet oder angebracht sind. Die Führungen 7 sind beispielsweise Führungsschienen, die an den Innenseiten der Dachholme 3 angeordnet sind und in vertikaler Draufsicht in Längsebenen verlaufen, wohingegen die Dachholme 3 in vertikaler Draufsicht gekrümmt verlaufen können.

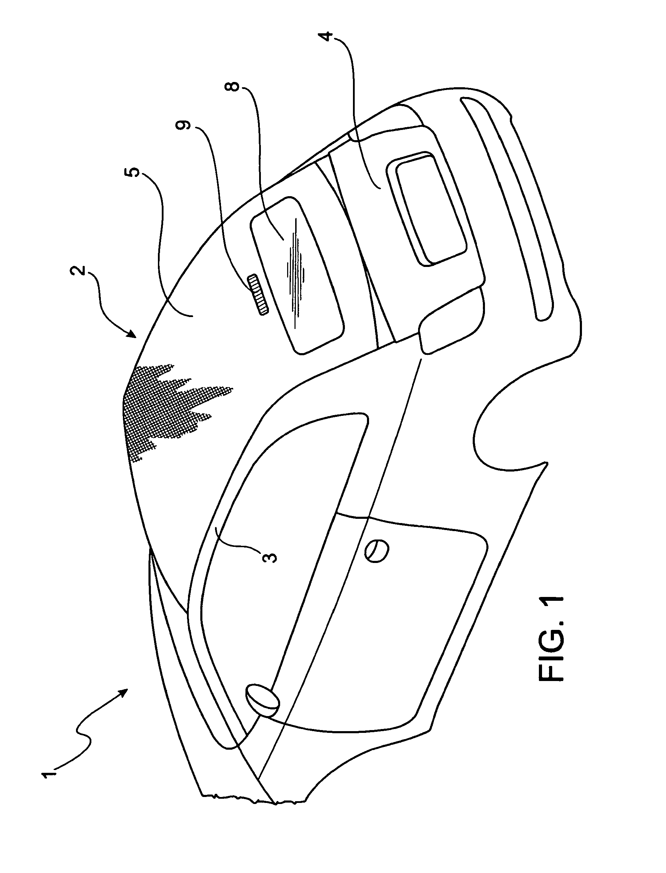

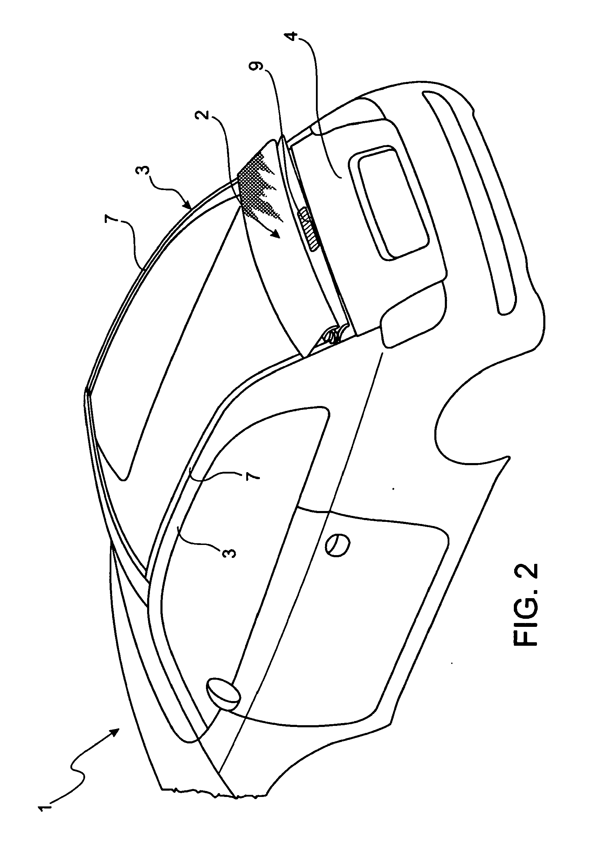

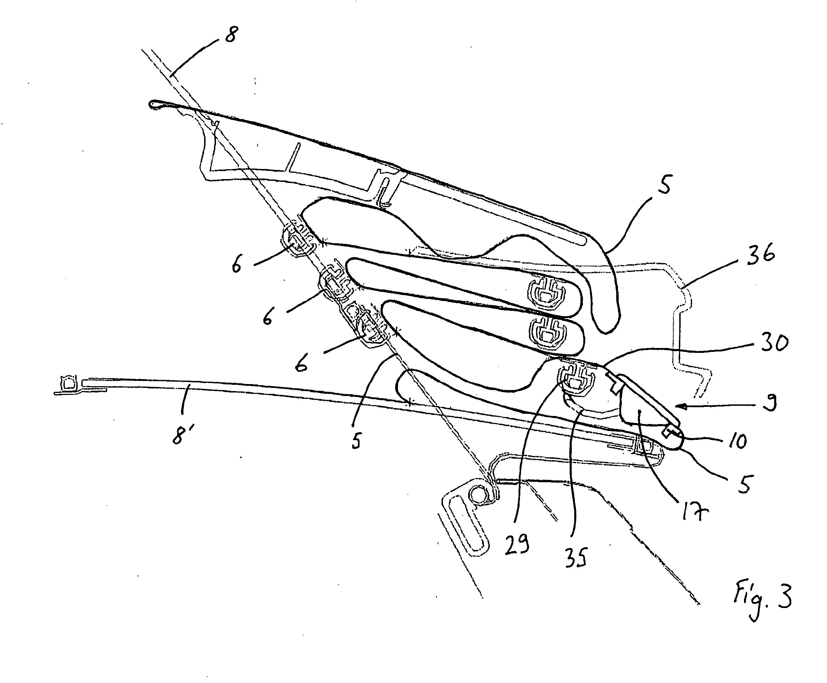

Eine in den Verdeckstoff 5 integrierte Heckscheibe 8 ist seitlich an den Dachholmen 3 oder den Führungen 7 jeweils mittels einer Lenkereinrichtung (nicht dargestellt) in Viergelenkanordnung verschwenkbar und/der verschiebbar gelagert. Die Heckscheibe 8 ist aus ihrer Schließstellung bei geschlossenem Faltverdeck 2 (Fig. 1 und 3) während des Öffnungsvorganges des Faltverdecks 2 mit dem sich faltenden Verdeckstoff 5 in ihre Ablagestellung (siehe Fig. 3, Heckscheibe 8') bei geöffnetem Faltverdeck (Fig. 2) verstellbar, in der sie in etwa horizontal oberhalb der Heckklappe 4 angeordnet ist.

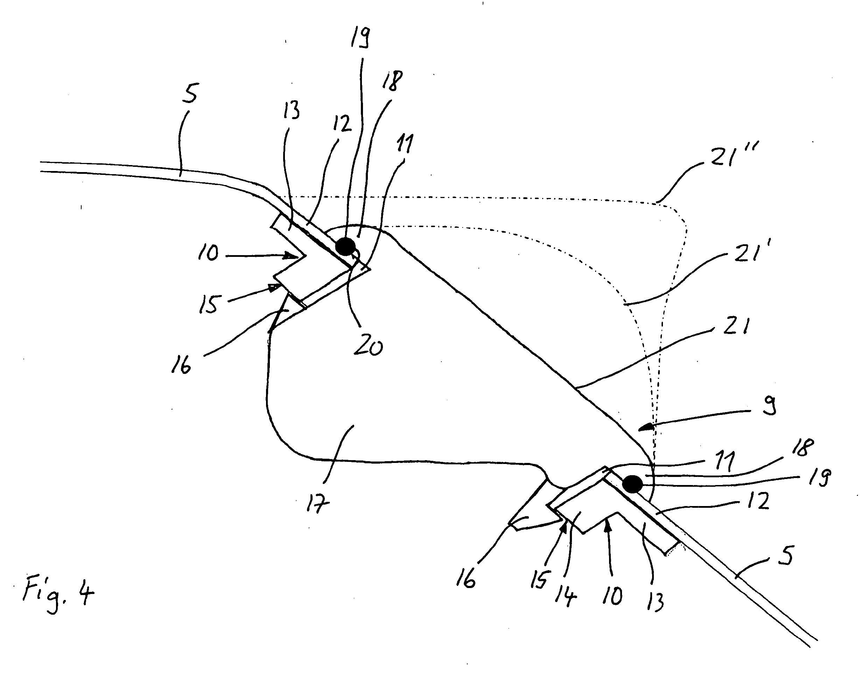

Eine Bremsleuchteneinheit 9 ist oberhalb der Heckscheibe 8 am Verdeckstoff 5 mittels einer Halterung integriert angeordnet, die beispielsweise als in Draufsicht rechteckförmiger Halterahmen 10 gebildet ist (siehe Fig. 4), der eine im Verdeckstoff 5 z. B. durch Ausstanzen gebildete Ausnehmung oder Öffnung 11 umgibt und an der Innenseite des Verdeckstoffes 5 an einem die Öffnung 11 umgebenden Randabschnitt 12 des Verdeckstoffes 5 fest angebracht ist, z. B. durch Verkleben, Verschweißen oder Nähen. Der Halterahmen 10 ist im Querschnitt z. B. L-förmig mit zwei Schenkeln 13 und 14 gebildet, wobei der eine Schenkel 13 eine ebene Außenfläche zum Anbringen an dem Verdeckstoff 5 aufweist und der andere Schenkel 14, der sich vom Verdeckstoff 5 einwärts erstreckt, einen Absatz oder eine Endfläche 15 aufweist, an der mehrere elastische Clipse, Vorsprünge oder Riegelhaken 16, die an der Rück- oder Innenseite eines Leuchtenkörpers 17 der Bremsleuchteneinheit 9 angeordnet sind, festlegbar sind, um die Bremsleuchteneinheit 9 am Halterahmen 10 insbesondere mittels einer Schnappverbindung sicher zu halten.

Der Leuchtenkörper 17 ist in der Öffnung des Halterahmens 10 mit Abstand zu diesem angeordnet und kann entweder über die Riegelhaken 16 oder andere Zentrierteile am Halterahmen 10 gehalten werden.

Ein umfangsseitiger Auflagebereich 18 des Leuchtenkörpers 17 erstreckt sich über den Leuchtenkörper 17 hinaus und liegt mit seiner Unterseite auf dem Randabschnitt 12 des Verdeckstoffes 5 auf. Eine zwischen dem Auflagebereich 18 und dem Verdeckstoff 5 angeordnete Dichtung 19 (schematisch dargestellt) ist z. B. in einer Vertiefung oder Nut 20 aufgenommen, die im Auflagebereich 18 gebildet ist. Die Dichtung 19 kann auch als Flachdichtung gebildet sein, die zwischen den Dichtflächen und insbesondere teilweise in einer Vertiefung angeordnet ist.

Der Halterahmen 10 kann auch mit einem topfförmigen Gehäuse gebildet sein (nicht dargestellt), das den Leuchtenkörper 17 innenseitig umschließt und dem Halterahmen 10 eine größere Stabilität verleiht. Für die Riegelhaken 16 des Leuchtenkörpers 17 können dann Ausnehmungen in dem Gehäuse gebildet sein.

Eine Streuscheibe 21 des Leuchtenkörpers 17 kann als ebene Fläche gebildet sein (siehe Fig. 4) oder sie kann die beiden in Fig. 4 strichliert dargestellten Formen (mit Bezugszeichen 21' und 21" bezeichnet) aufweisen. So kann die spoilerartige Form 21" aufgrund der Umströmung im Fahrbetrieb zu einer geringeren Verschmutzung der nach hinten weisenden Leuchtfläche führen.

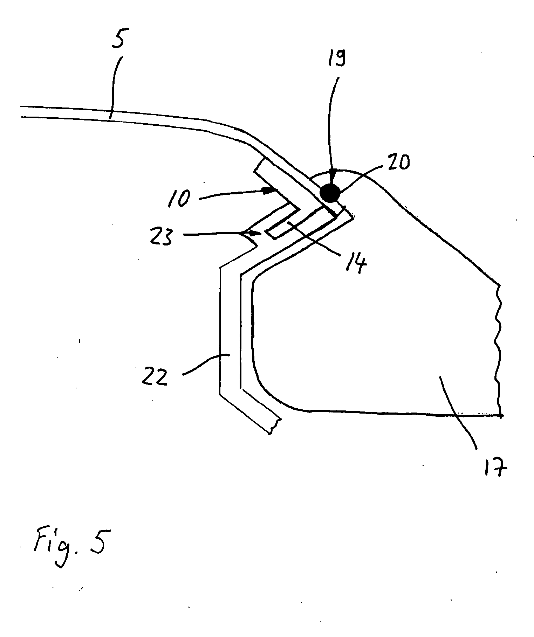

Fig. 5 zeigt eine abgewandelte Halterung, bei der an dem Halterahmen 10, der vergleichbar dem in der Fig. 4 dargestellten Halterahmen 10 gebildet ist, ein Abdeckgehäuse 22 festgelegt ist, das den Leuchtenkörper 17 innenseitig umschließt. Das Abdeckgehäuse 22 ist über eine den Schenkel 14 teilweise oder gänzlich umgreifende Steckverbindung 23 am Halterahmen 10 festlegbar und kann zusätzlich mittels Halteklammern (nicht dargestellt) gesichert sein. Der Leuchtenkörper 17 ist entsprechend dem vorangehenden Ausführungsbeispiel mittels Clipsen oder Riegelhaken oder auch mittels Verschraubung am Halterahmen 10 festlegbar (nicht dargestellt), kann aber auch zusätzlich oder ausschließlich am Abdeckgehäuse 22 festgelegt werden.

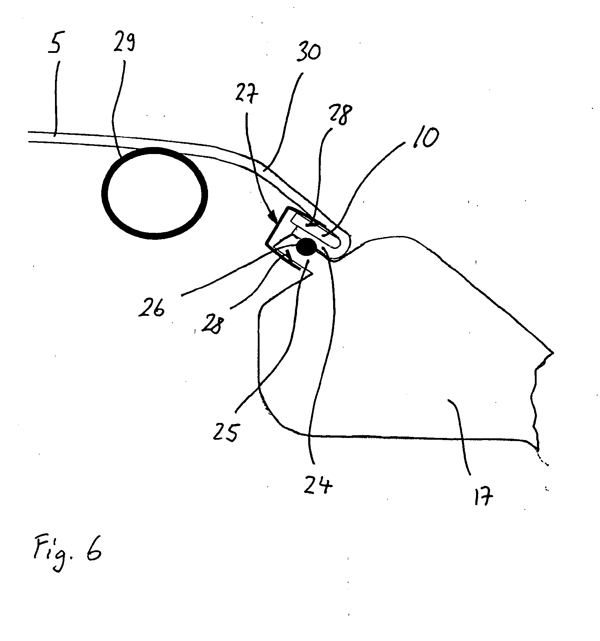

Bei dem in Fig. 6 dargestellten Ausführungsbeispiel ist ein Halterahmen 10 an der Innenseite des Verdeckstoffes 5 in einem Abstand entsprechend in etwa seiner Breite von der Ausnehmung oder Öffnung 11 im Verdeckstoff 5 entfernt angeordnet und insbesondere am Verdeckstoff 5 verklebt und ein an die Öffnung 11 angrenzender Randstreifen 24 des Verdeckstoffes 5 ist dann auf die Innenseite des Halterahmens 10 umgelegt, wobei er zum Umlegen gegebenenfalls in den Eckbereichen randseitig eingeschnitten wird, und wird daran z. B. durch Verkleben befestigt. Der Leuchtenkörper 17 weist einen umlaufenden abstehenden Steg 25 auf und wird bei der Montage von der Innenseite des Verdeckstoffes 5 her mit seinem Steg 25 an den umgebogenen Randstreifen 24 des Verdeckstoffes 5, der von dem dahinter angeordneten Halterahmen 10 verstärkt ist, angelegt. Der Steg 25 ist in lotrechter Draufsicht in etwa deckungsgleich mit dem Halterahmen 10. Zwischen dem Steg 25 und dem Verdeckstoff 5 ist eine Dichtung 26 angeordnet, die im Querschnitt rund (wie in Fig. 6 dargestellt) oder auch flach sein kann. Insbesondere eine im Querschnitt runde oder ovale Dichtung 26 ist in einer umlaufenden Vertiefung oder Nut, die am Steg 25 auf seiner dem Halterahmen 10 zugewandten Seite gebildet ist, mit einem Teil ihres Querschnitts aufgenommen Der Halterahmen 10 ist ein biegesteifes Teil, z. B. aus Kunststoff oder aus einem Blech.

Zur Befestigung des Leuchtenkörpers 17 werden mehrere Halteklammern 27, insbesondere Metallhalteklammern, über den Steg 25 und den Halterahmen 10 gesteckt, die sich über Rasthaken 28 daran festklammern. Die Halteklammern 27 sind am Umfang des Leuchtenkörpers 17 entlang dem Steg 25 insbesondere in gleichem Abstand verteilt angeordnet. Damit ergibt sich eine dichte Anbringung des Leuchtenkörpers 17 an dem Halterahmen 10 bzw. dem Verdeckstoff 5.

Zum Austauschen des Leuchtenkörpers 17 werden die Halteklammern 27 abgezogen, so dass der Leuchtenkörper 17 bei geschlossenem Faltverdeck 2 nach innen hin entnommen werden kann. Statt der Halteklammern 27 oder ergänzend zu diesen kann die Befestigung auch durch Schnappverbindungen oder durch Verschraubungen erfolgen.

Die Bremsleuchteneinheit 9 ist in den Fig. 4 bis 6 bei geschlossenem Faltverdeck 2 dargestellt, so dass der Leuchtenkörper 17 stets seine nach hinten abstrahlende Funktionsstellung einnimmt. Wenn der Leuchtenkörper 17 auch bei offenem und abgelegtem Faltverdeck 2 derart positioniert sein soll, dass er nach hinten in funktionsfähiger Weise abstrahlen kann (siehe Fig. 3), so kann eine Stellungsanpassung des Leuchtenkörpers 17 dadurch vorgenommen werden, dass der Verdeckstoff 5 zwischen dem Halterahmen 10 und einem davor angeordneten Eckspriegel 29 eines Verdeckgestänges eine Funktion als Filmscharnier 30 übernimmt und demzufolge die Bremsleuchteneinheit 9 mit dem Leuchtenkörper 17 relativ zum Eckspriegel 29 in seiner jeweiligen Position mit der Bewegung des Verdeckstoffes 5 verstellbar ist. Damit ist sowohl bei geschlossenem Faltverdeck 2 wie auch bei offenem Faltverdeck 2 die korrekte Funktion der Bremsleuchteneinheit 9 bzw. des Leuchtenkörpers 17 gewährleistet.

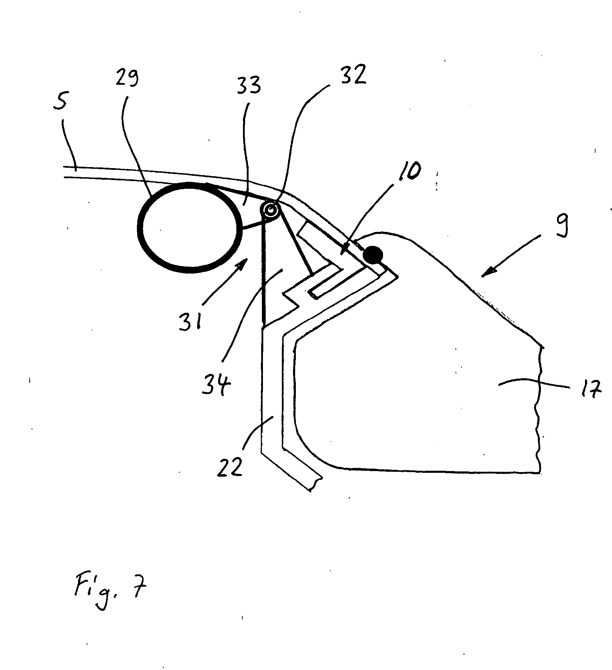

Gemäß einer alternativen Gestaltung ist für eine Verstellung der Bremsleuchteneinheit 9 vorgesehen (siehe Fig. 7), dass am Eckspriegel 29 eine Schwenklagereinrichtung 31 mit einer zwischen dem Eckspriegel 29 und der Bremsleuchteneinheit 9 unterhalb des Verdeckstoffes 5 angeordneten Schwenkachse 32 vorgesehen ist, die z. B. als ein Scharnier gestaltet ist und einerseits über ein Trägerteil 33 an dem Eckspriegel 29 und andererseits über ein Trägerteil 34 an dem Abdeckgehäuse 22 oder dem Halterahmen 10 angebracht ist. Eine (nicht dargestellte) Kinematik, z. B. in Gestalt eines Getriebes mit Lenkern und/oder Zahnrädern, steuert die Stellung der Bremsleuchteneinheit 9 und ihre Bewegung relativ zum Eckspriegel 29 beim Verstellen des Faltverdecks 2 zwischen seiner Schließstellung und seiner Ablagestellung. Endlagenanschläge (nicht dargestellt) können die jeweilige Stellung der Bremsleuchteneinheit 9 begrenzen und sind insbesondere dann von Vorteil, wenn die Bremsleuchteneinheit 9 ohne zwangssteuernde Kinematik lediglich vom Verdeckstoff 5 beim Öffnen und Schließen des Faltverdecks 2 bewegt wird.

Mit dieser Schwenklagereinrichtung 31 kann die Bremsleuchteneinheit 9 bei geschlossenem wie auch bei geöffnetem und abgelegtem Faltverdeck 2 in die jeweils erforderliche Stellung gebracht werden.

Fig. 3 zeigt das geöffnete und abgelegte Faltverdeck 2 mit der in etwa horizontal angeordneten Heckscheibe 8', auf deren Hinterrand die Bremsleuchteneinheit 9 zu liegen kommt. Ein mit der Bremsleuchteneinheit 9 und mit dem Eckspriegel 29 verbundenes Zungenscharnier 35 steuert die Stellung der Bremsleuchteneinheit 9. Das Zungenscharnier 35 ist somit eine Ausführungsform einer Schwenklagereinrichtung.

In Fig. 3 ist ein aus dem Stand der Technik bekanntes, sich über die Breite des Faltverdecks erstreckendes Spoilerbauteil 36 eingezeichnet, das eine Bremsleuchteneinheit aufweist und gegenüber der erfindungsgemäßen Bremsleuchteneinheit 9 einen wesentlich größeren Platzbedarf in vertikaler Richtung aufweist, so dass das mit einem derartigen Spoilerbauteil 36 versehene Faltverdeck nicht in der in Fig. 3 dargestellten kompakten Stellung, die es mit der erfindungsgemäßen Bremsleuchteneinheit 9 einnehmen kann, abgelegt werden kann.

Die hier anhand von Ausführungsbeispielen offenbarten einzelnen Merkmale können in beliebigen technisch zweckmäßigen Anordnungen mit dem Erfindungsgegenstand in seiner allgemeinen Form kombiniert werden.

### Bezugszeichenliste

- 1: Fahrzeug
- 2: Faltverdeck
- 3: Dachholm
- 4: Heckklappe
- 5: Verdeckstoff
- 6: Querspriegel
- 7: Führung
- 8: Heckscheibe
- 9: Bremsleuchteneinheit
- 10: Halterahmen
- 11: Öffnung
- 12: Randabschnitt
- 13: Schenkel
- 14: Schenkel
- 15: Endfläche
- 16: Riegelhaken
- 17: Leuchtenkörper
- 18: Auflagebereich
- 19: Dichtung
- 20: Nut
- 21: Streuscheibe
- 22: Abdeckgehäuse
- 23: Steckverbindung
- 24: Randstreifen
- 25: Steg
- 26: Dichtung
- 27: Halteklammer
- 28: Rasthaken
- 29: Eckspriegel
- 30: Filmscharnier
- 31: Schwenklagereinrichtung
- 32: Schwenkachse
- 33: Trägerteil
- 34: Trägerteil
- 35: Zungenscharnier
- 36: Spoilerbauteil

## Patentansprüche

1. Faltverdeck eines Fahrzeugs mit einer am Faltverdeck (2) angeordneten Bremsleuchteneinheit (9), die in einer in einem Verdeckstoff (5) des Faltverdecks (2) gebildeten Ausnehmung (11) aufgenommen ist,
**dadurch gekennzeichnet,**
**dass** eine Halterung (10) der Bremsleuchteneinheit (9) innenseitig an einem die Ausnehmung (11) umgebenden Randbereich (12) des Verdeckstoffes (5) angebracht ist und eine stabile Lagerung der Bremsleuchteneinheit (9) an dem Verdeckstoff (5) bildet.

2. Faltverdeck nach Anspruch 1,
**dadurch gekennzeichnet, dass** der Verdeckstoff (5) die Bremsleuchteneinheit (9) vollständig umgibt.

3. Faltverdeck nach Anspruch 1 oder 2,
**dadurch gekennzeichnet, dass** die Halterung (10) eine Befestigungsaufnahme für einen Leuchtenkörper (17) der Bremsleuchteneinheit (9) aufweist.

4. Faltverdeck nach einem der Ansprüche 1 bis 3,
**dadurch gekennzeichnet, dass** die Halterung (10) ringförmig gebildet ist und sich im wesentlichen entlang dem Rand der im Verdeckstoff (5) gebildeten Ausnehmung (11) erstreckt.

5. Faltverdeck nach einem der Ansprüche 1 bis 4,
**dadurch gekennzeichnet, dass** sich der an der Halterung (10) angebrachte Leuchtenkörper (17) durch eine zentrale Öffnung der Halterung (10) erstreckt.

6. Faltverdeck nach einem der Ansprüche 3 bis 5,
**dadurch gekennzeichnet, dass** der Leuchtenkörper (17) einen randseitigen Auflagebereich (18) aufweist, der sich über den die Ausnehmung (11) umgebenden Randbereich (12) des Verdeckstoffes (5) erstreckt.

7. Faltverdeck nach einem der Ansprüche 3 bis 6,
**dadurch gekennzeichnet, dass** eine insbesondere ringförmige Dichtung (19) zwischen dem Leuchtenkörper (17) und dem Verdeckstoff (5) oder der Halterung (10), insbesondere zwischen dem den Auflagebereich (18) bildenden Randabschnitt und der Halterung (10), angeordnet ist.

8. Faltverdeck nach einem der Ansprüche 3 bis 7,
**dadurch gekennzeichnet, dass** der Leuchtenkörper (17) an der Halterung (10) befestigt ist, insbesondere durch eine Schnappverbindung, durch Clipse, durch Rasthaken oder durch eine Verschraubung.

9. Faltverdeck nach einem der Ansprüche 3 bis 8,
**dadurch gekennzeichnet, dass** an der Halterung (10) ein Hilfsrahmen oder Gehäuse (22) befestigt ist, an dem der Leuchtenkörper (17) festlegbar ist, und dass insbesondere das Gehäuse (22) die Rückseite des eingesetzten Leuchtenkörpers (17) umgibt.

10. Faltverdeck nach Anspruch 9,
**dadurch gekennzeichnet, dass** der Hilfsrahmen bzw. das Gehäuse (22) an der Halterung (10) durch eine Steckverbindung (23), eine Verrastung oder eine Verschraubung befestigt ist.

11. Faltverdeck nach einem der Ansprüche 1 bis 10,
**dadurch gekennzeichnet, dass** die Halterung (10) der Bremsleuchteneinheit (9) innenseitig an dem die Ausnehmung (11) umgebenden Randbereich (12) des Verdeckstoffes (5) angebracht ist und der Verdeckstoff (5) um die Halterung (10) umgeschlagen und daran befestigt ist und ein Steg (25) des Leuchtenkörper (17) innenseitig am an der Halterung (10) anliegenden Verdeckstoff (5) befestigt wird und dass insbesondere zumindest eine Halteklammer (27) den Steg (25) des Leuchtenkörpers (17) und die Halterung (10) umgreift.

12. Faltverdeck nach einem der Ansprüche 1 bis 11,
**dadurch gekennzeichnet, dass** der Verdeckstoff (5) oberhalb der Ausnehmung (11) bzw. der Bremsleuchteneinheit (9) ein Filmscharnier (30) bildet und dass insbesondere der das Filmscharnier (30) bildende Verdeckstoff (5) zwischen der Bremsleuchteneinheit (9) und einem Eckspriegel (20) des Faltverdecks (2) angeordnet ist.

13. Faltverdeck nach einem der Ansprüche 1 bis 12,
**dadurch gekennzeichnet, dass** die Bremsleuchteneinheit (9) sowohl bei geschlossenem Faltverdeck (2) wie auch bei geöffnetem Faltverdeck (2) funktional nach hinten ausgerichtet ist.

14. Faltverdeck nach einem der Ansprüche 1 bis 13,
**dadurch gekennzeichnet, dass** die Bremsleuchteneinheit (9) mittels einer Schwenklagereinrichtung (31; 35) an einem Bauteil (29) des Faltverdecks (2) bewegbar gelagert und/oder bei der Verstellbewegung des Faltverdecks (2) mittels einer Kinematik zwangsgesteuert ist und/oder durch Anschläge in ihrer jeweiligen Stellung begrenzt ist.

15. Faltverdeck nach einem der Ansprüche 1 bis 14,
**dadurch gekennzeichnet, dass** die Bremsleuchteneinheit (9) weniger als 30% und insbesondere weniger als 20% der Breite des Faltverdecks (2) an ihrer Einbauposition aufweist.

## Claims

1. Folding roof for a vehicle, with a brake light unit (9) which is arranged on the folding roof (2) and is accommodated in a recess (11) formed in a folding roof fabric (5) of the folding roof (2), **characterized in that** a holder (10) for the brake light unit (9) is fitted on the inside of an edge region (12) of the folding roof fabric (5), which edge region surrounds the recess (11), and forms a stable mounting of the brake light unit (9) on the folding roof fabric (5).

2. Folding roof according to Claim 1, **characterized in that** the folding roof fabric (5) completely surrounds the brake light unit (9).

3. Folding roof according to Claim 1 or 2, **characterized in that** the holder (10) has a fastening support for a light unit body (17) of the brake light unit (9).

4. Folding roof according to one of Claims 1 to 3, **characterized in that** the holder (10) is formed in an annular manner and extends substantially along the edge of the recess (11) formed in the folding roof fabric (5).

5. Folding roof according to one of Claims 1 to 4, **characterized in that** the light unit body (17) fitted on the holder (10) extends through a central opening in the holder (10).

6. Folding roof according to one of Claims 3 to 5, **characterized in that** the edge of the light unit body (17) has a supporting region (18) which extends over the edge region (12) of the folding roof fabric (5), which edge region surrounds the recess (11).

7. Folding roof according to one of Claims 3 to 6, **characterized in that** an in particular annular seal (19) is arranged between the light unit body (17) and the folding roof fabric (5) or the holder (10), in particular between the edge section forming the supporting region (18) and the holder (10).

8. Folding roof according to one of Claims 3 to 7, **characterized in that** the light unit body (17) is fastened to the holder (10), in particular by a snap-in connection, by clips, by latching hooks or by a screw connection.

9. Folding roof according to one of Claims 3 to 8, **characterized in that** an auxiliary frame or housing (22), to which the light unit body (17) can be fixed, is fastened to the holder (10), and **in that** in particular the housing (22) surrounds the rear side of the inserted light unit body (17).

10. Folding roof according to Claim 9, **characterized in that** the auxiliary frame or the housing (22) is fastened to the holder (10) by a plug-in connection (23), a latching connection or a screw connection.

11. Folding roof according to one of Claims 1 to 10, **characterized in that** the holder (10) of the brake light unit (9) is fitted on the inside of the edge region (12) of the folding roof fabric (5), which edge region surrounds the recess (11), and the folding roof fabric (5) is folded around the holder (10) and is fastened thereto, and a web (25) of the light unit body (17) is fastened on the inside of the folding roof fabric (5), which bears against the holder (10), and **in that** in particular at least one retaining clip (27) engages around the web (25) of the light unit body (17) and the holder (10).

12. Folding roof according to one of Claims 1 to 11, **characterized in that** the folding roof fabric (5) forms a film hinge (30) above the recess (11) and the brake light unit (9), and **in that** in particular the folding roof fabric (5) forming the film hinge (30) is arranged between the brake light unit (9) and a corner bow (20) of the folding roof (2).

13. Folding roof according to one of Claims 1 to 12, **characterized in that** the brake light unit (9) is functionally oriented rearwards both when the folding roof (2) is closed and when the folding roof (2) is open.

14. Folding roof according to one of Claims 1 to 13, **characterized in that** the brake light unit (9) is mounted movably on a component (29) of the folding roof (2) by means of a swivel bearing device (31; 35) and/or is positively controlled by means of kinematics during the displacement movement of the folding roof (2) and/or is restricted in the respective position thereof by means of stops.

15. Folding roof according to one of Claims 1 to 14, **characterized in that**, at the fitted position thereof, the brake light unit (9) takes up less than 30% and in particular less than 20% of the width of the folding roof (2).

## Revendications

1. Capote pliable de véhicule dotée d'une unité de feu de stop (9) disposée au niveau de la capote pliable (2), ladite unité étant logée dans un évidement (11) formé dans un tissu de capote (5) de la capote pliable (2), **caractérisée en ce qu'**un support (10) de l'unité de feu de stop (9) est disposé côté intérieur contre une zone de bordure (12) du tissu de capote (5) entourant l'évidement (11) et constituant un appui stable de l'unité de feu de stop (9) contre le tissu de capote (5).

2. Capote pliable selon la revendication 1, **caractérisée en ce que** le tissu de capote (5) entoure entièrement l'unité de feu de stop (9).

3. Capote pliable selon la revendication 1 ou 2, **caractérisée en ce que** le support (10) comporte un logement de fixation conçu pour un corps de feu (17) de l'unité de feu de stop (9).

4. Capote pliable selon l'une quelconque des revendications 1 à 3, **caractérisée en ce que** le support (10) prend une forme annulaire et s'étend pour l'essentiel le long du bord de l'évidement (11) formé dans le tissu de capote (5).

5. Capote pliable selon l'une quelconque des revendications 1 à 4, **caractérisée en ce que** le corps de feu (17) placé contre le support (10) s'étend à travers une ouverture centrale du support (10).

6. Capote pliable selon l'une quelconque des revendications 3 à 5, **caractérisée en ce que** le corps de feu (17) comporte une zone d'appui (18) située côté bordure qui s'étend au-delà de la zone de bordure (12) du tissu de capote (5) entourant l'évidement (11).

7. Capote pliable selon l'une quelconque des revendications 3 à 6, **caractérisée en ce qu'**un joint (19) prenant notamment une forme annulaire est disposé entre le corps de feu (17) et le tissu de capote (5) ou le support (10), notamment entre la section de bordure formant la zone d'appui (18) et le support (10).

8. Capote pliable selon l'une quelconque des revendications 3 à 7, **caractérisée en ce que** le corps de feu (17) est fixé au support (10), notamment par le biais d'une liaison par encliquetage rapide, de clips, de crochets d'arrêt ou d'un raccord vissé.

9. Capote pliable selon l'une quelconque des revendications 3 à 8, **caractérisée en ce qu'**un cadre auxiliaire ou boîtier (22) est fixé au support (10), le corps de feu (17) pouvant lui-même être fixé audit cadre et **en ce que** le boîtier (22), notamment, entoure le côté arrière du corps de feu (17) à l'état inséré.

10. Capote pliable selon la revendication 9, **caractérisée en ce que** le cadre auxiliaire et/ou le boîtier (22) est fixé au support (10) par le biais d'une liaison enfichable (23), d'une jonction par enclenchement ou d'un raccord vissé.

11. Capote pliable selon l'une quelconque des revendications 1 à 10, **caractérisée en ce que** le support (10) de l'unité de feu de stop (9) est placé côté intérieur contre la zone de bordure (12) du tissu de capote (5) entourant l'évidement (11) et que le tissu de capote (5) est rabattu autour du support (10) et y est fixé et qu'un étai (25) du corps de feu (17) est fixé côté intérieur au tissu de capote (5) connexe au support (10) et que notamment au moins une pince d'arrêt (27) agrippe l'étai (25) du corps de feu (17) et le support (10) de façon à les envelopper.

12. Capote pliable selon l'une quelconque des revendications 1 à 11, **caractérisée en ce que** le tissu de capote (5) forme une charnière pelliculaire (30) au-dessus de l'évidement (11) et/ou de l'unité de feu de stop (9) et que notamment le tissu de capote (5) formant la charnière pelliculaire (30) est disposé entre l'unité de feu de stop (9) et un arceau d'angle (20) de la capote pliable (2).

13. Capote pliable selon l'une quelconque des revendications 1 à 12, **caractérisée en ce que** l'unité de feu de stop (9) est orientée, tant lorsque la capote pliable (2) est fermée que lorsque la capote pliable (2) est ouverte vers l'arrière pour être fonctionnelle.

14. Capote pliable selon l'une quelconque des revendications 1 à 13, **caractérisée en ce que** l'unité de feu de stop (9) est disposée de façon mobile contre un composant (29) de la capote pliable (2) à l'aide d'un dispositif de roulement basculant (31 ; 35) et/ou est commandé de force lors du mouvement de déplacement de la capote pliable (2) à l'aide d'un élément cinématique et/ou est limité par des butées dans sa position respective.

15. Capote pliable selon l'une quelconque des revendications 1 à 14, **caractérisée en ce que** dans sa position encastrée, l'unité de feu de stop (9) présente une largeur inférieure de 30 % et notamment de 20 % par rapport à la capote pliable (2).
